# EUROPEAN PATENT APPLICATION

(11) **EP 1 464 466 A2**
(43) Date of publication of application: **06.10.2004**
(21) Application number: 04007581.4
(22) Date of filing: 29.03.2004
(51) Int. Cl.: B29C 45/67, B29C 33/24

(54) **A mold clamping apparatus**

(30) Priority: 31.03.2003 JP 2003095599
(71) Applicant: A.K. TECHNICAL LABORATORY, INC.,, Hanishina-gun, Nagano-ken (JP)
(72) Inventor: Kobayashi, Hiromitsu A.K. Technical Lab., Inc., Hanishina-gun Nagano-ken (JP); Miyashita, Masahiro A.K. Technical Lab., Inc., Hanishina-gun Nagano-ken (JP); Tatebe, Hidetoshi A.K. Technical Lab., Inc., Hanishina-gun Nagano-ken (JP); Kifune, Makoto A.K. Technical Lab., Inc., Hanishina-gun Nagano-ken (JP)
(74) Representative: Parry, Simon James

(57) **Abstract**

A movable platen 5 which is provided between a base platen and a stationary platen, is connected to a mold clamping ram13 of a mold clamping cylinder 8. A pair of mold clamping cylinders 8 include a cylinder of which the inner diameter of their lower end portions is smaller than the inner diameter of the other portions, the mold clamping ram 13 having a piston 14 which fits to the lower end, a booster rarn 16 which is Inserted into the mold clamping ram, and a circulation device 20 which is provided to a side portion of the mold clamping cylinder.
A pair of mold clamping cylinders 8 are provided having a space in both sides of the stationary platen2. A charge cylinder 9 is provided on the stationary platen between a pair of mold clamping cylinders. The movable platen5 is connected to a pair of mold clamping rams. A pair of mold clamping cylinders 8 are operated to clamp the mold simultaneously at two positions, left and right, with sharing the charge cylinder 9.

## Description

### FIELD OF THE INVENTION

The present invention relates to a mold clamping device which is provided with a mold clamping cylinder having a differential pressure actuation and a charge cylinder which is provided to supply and discharge pressure oil of the mold clamping cylinder.

### BACKGROUND OF THE INVENTION

According to the conventional mold clamping apparatus, a movable platen between two stationary platens provided facing by coupling with a tie bar, is connected to a mold clamping ram of a molding clamping cylinder which is provided to either one of the stationary platens, and a mold, which is set to a movable platen and another stationary platen, is able to be conducted clamping, and in some cases, the differential pressure actuation is employed for the mold clamping cylinder (e.g.: United States Patent No.5,082,787=reference patent 1).

According to the above mentioned mold clamping apparatus described in the reference patent 1, in the mold clamping cylinder, the inner diameter of an upper chamber is larger than the Inner diameter of a lower chamber, the lower chamber is communicated with a charge cylinder which is provided in parallel to the side portion of the mold clamping cylinder, and the mold clamping ram of the mold clamping cylinder which is communicated with the both upper and lower chambers through bypass being provided with an on-off valve is coupled to the movable platen with a piston rod of the charge cylinder, so that the movable platen is conducted the mold clamping at a single point in the center. In order to get many products in one operation, if the movable platen is designed to construct in a rectangle, the ratio of defective products which are produced at both ends, becomes high because a clamping force at both ends becomes so weak that the movable platen is susceptible to be bent by the injection force, and a gap at parting line appears. The problem of the bent can be solved by an increase of the movable platen thickness. However, the solution is difficult to employ for the purpose to advance a reduction of the molding cycle time by speeding up an opening and closing of a mold, since a transfer of the movable platen is difficult in a high speed because the increase of the movable platen thickness makes the increase of the weight.

### SUMMARY OF THE INVENTION

The present invention is devised to solve the above mentioned conventional technical problem, and the purpose is to provide a new mold clamping apparatus wherein a plurality of the mold clamping cylinders are provided, and they share one charge cylinder, accordingly this provides that the mold clamping rams are able to be connected with the movable platen at two points, left and right, so that the range within the mold clamping force is extended, and a large weight of the movable platen does not need to be employed.

The present invention relates to a mold clamping apparatus comprising
a base platen on which an injection mold is set;
a stationary platen which has a mold clamping cylinder;
said base platen and said stationary platen are connected by a tie bar, and are facing toward each other;
a movable platen which is positioned between said base platen and said stationary platen, in which said tie bar is inserted, and which is connected to a mold damping ram of said mold clamping cylinder;
said mold clamping cylinder has a cylinder portion of which the inner diameter at a lower end portion is smaller than the inner diameter of other portions of the lower end portion;
said mold clamping ram has a piston of which the outer diameter is capable to fit to the lower end portion of said cylinder;
a booster ram is inserted internally to said mold damping ram;
a circulation device for pressure oil is provided to a side of said mold clamping cylinder;
a charge cylinder is provided to a side portion of said mold clamping cylinder;
said lower end portion of said mold clamping cylinder is communicated with a lower end portion of the charge cylinder; and
said mold clamping ram and a charge rod of said charge cylinder are connected with said movable platen; wherein
said mold clamping cylinders consist of a pair, have the mold clamping rams respectively, and are provided to said stationary platen on a left and a right side with leaving a space;
the charge cylinder is provided to said stationary platen which is positioned between a pair of said mold clamping cylinders;
said movable platen is connected to a pair of said mold clamping rams;
a pair of said mold clamping cylinders include to make an operation of the mold clamping at two points simultaneously by sharing said charge cylinder.

The above mentioned circulation device of this invention comprises,
a cylinder;
circulation ports for pressure oll on both upper and lower sides of said cylinder are bored, and supply and discharge ports are bored at the same level position of said circulation ports on another side of the cylinder which is provided for said circulation ports;
a valve seat provided to an inside of the cylinder adjacent to an upper side of said supply and discharge ports;
a check valve which is held against the valve seat side by a spring member;
a pilot oil circuit bored through a cover member on a lower end of said cylinder;
in the inside of said cylinder, a rod for a valve opening which has a piston at an end portion closer to said cover member, and another end touches to said check valve;
a circulation pipe which is provided so as to communicate said circulation ports and circulation holes which are bored to a pair of said mold clamping cylinders;
said circulation device is set on said stationary platen at a position between a pair of said mold clamping cylinders,

### BRIEF DESCRIPTION OF THE DRAWINGS

FIG.1 is a front view of a longitudinal section of the essential portion of the mold clamping apparatus according to the one of the embodiments of this invention at the state of mold opening.
FIG.2 is a front view of the mold clamping apparatus according to the one of the embodiments of this invention at the state of mold opening.

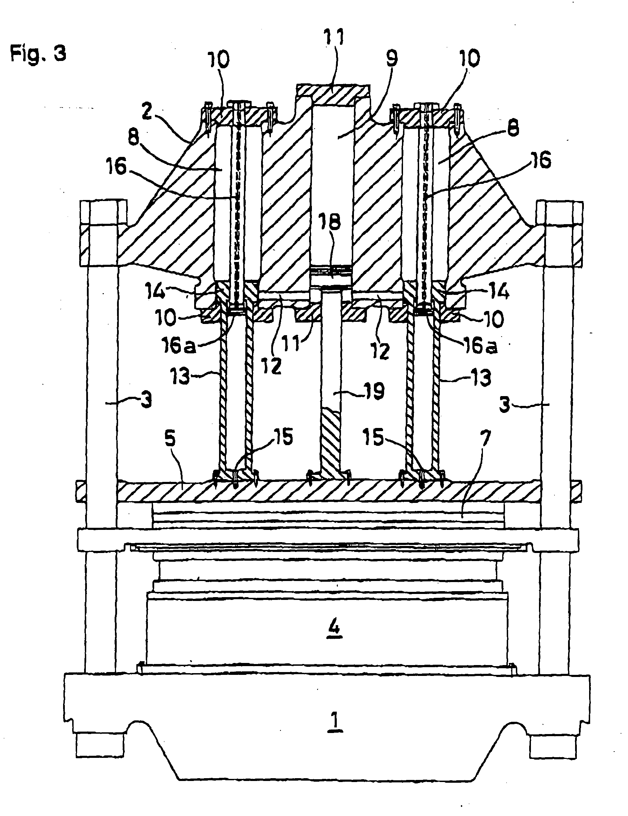

FIG.3 is a front view of a longitudinal section of the essential portion at the state of mold closing.

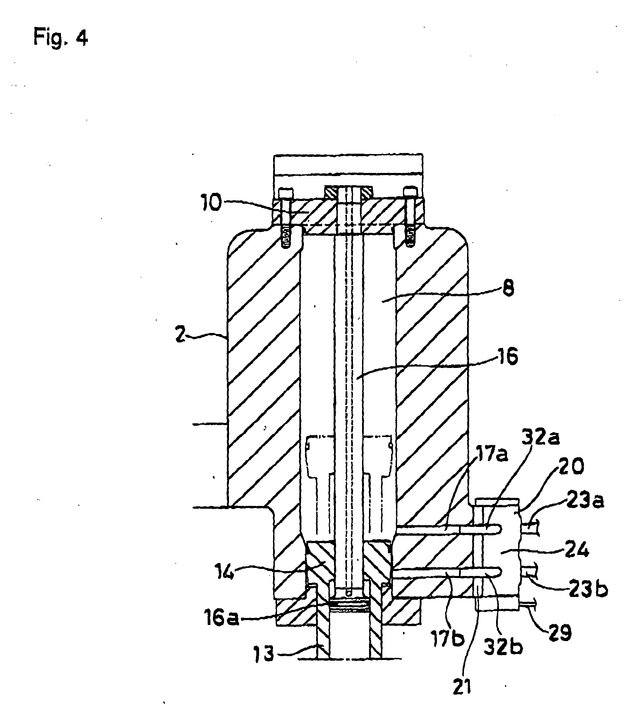

F1G.4 is a side view of a longitudinal section of the mold clamping cylinder.
FIG.5 is a front view of a longitudinal section of the circulation device.
FIG.6 is a side view of a longitudinal section of the circulation device.

### DETAILED DESCRIPTION OF THE PREFERRED EMBODIMENT

According to the construction of the invention, since the movable platen which is made to clamp the mold at two points of left and right, even If the movable platen is horizontally long, it makes that a range of a mold clamping force covers wider, the clamping force acts evenly through both ends of the movable platen, and bent of the movable platen caused easily by deflection of both ends in case of the conventional technique which provides the clamping force at a single point in the center and a gap of a parting line, are prevented. Therefore, the ratio of the defective products in the mold which is susceptible to occur in both ends position of the mold clamping apparatus, is decreased, and a mass production can be performed without a use of a large scale mold clamping apparatus which has a high mold clamping force. Also, since one charge cylinder and the circulation device are provided to share with the two mold clamping cylinders, the high efficient mold clamping apparatus can be accomplished as a result that a simultaneous operation by a plurality of the mold clamping cylinders is securely conducted, and an inconvenience by the use of a plurality of the mold clamping cylinders is dissolved.

Each figure shows a vertical type mold clamping apparatus where a reference numeral 1 indicates a base platen for setting a mold, a reference numeral 2 is a stationary platen having the mold clamping apparatus, and the both platens are connected to tie bars 3,3 at both sides, A reference numeral 4 is an injection cavity mold provided on the base platen 1, and a reference numeral 5 is a movable platen provided between the two platens into which the tie bars are inserted. On the lower surface of the movable platen 5, a plurality of cores 6,6 are set pointing downward with a seat plate7.

Reference numerals 8,8 are the mold clamping cylinders with a pair of left-right, and a reference numeral 9 is the charge cylinder positioned between the mold clamping cylinders, and those cylinders are closed by cover members 10,11, which seal the upper and lower ends of a vertical holes bored through the center and both sides of the stationary platen 2. Also, both mold clamping cylinders 8,8 and the charge cylinder 9 are communicated with the communicating circuit 12 which is bored horizontally through the lower end portion of the stationary platen2.

The inner diameter of the lower end portions of the above mentioned mold clamping cylinders 8,8 where the communicating circuit 12 is bored through is smaller than the inner diameter of other portions of the mold clamping cylinders. In the inside of the mold clamping cylinders 8,8, the cylindrical mold clamping ram 13 is inserted from below, The piston 14 integrally provided to the upper end of the mold clamping ram 13 partitions watertightly into the upper chamber and the lower chamber in the mold clamping cylindere 8,8 by fitting into the lower end portion of the mold clamping cylinder having the smaller diameter. At the side of the mold clamping cylinder, in the position that the piston 14 fits watertlghtly, the circulation hole 17a is bored so as to communicate the circulation device 20 to the upper chamber of the cylinder, and the circulation hole 17b is bored so as to communicate the circulation device 20 and the lower chamber of the cylinder, respectively. The lower end portions of the mold clamping rams 13,13 have air releasing ports. Also in the mold clamping ram 13, the booster ram 16 having the piston 16a at the tip portion is inserted from the upper portion of the mold clamping cylinders to the lower end portion of the mold clamping ram through the piston 14.

The lower ends of such mold clamping rams 13,13 and the lower end of the charge rod 19, having a piston 18 at the end inserted through the above mentioned charge cylinder 9 are coupled to the above mentioned movable platen 5 together. By using such construction, the mold clamping is conducted by holding the movable platen 5 at two points, left and right, and it enables to maintain the movable platen 5 vertically movable above the aforementioned injection cavity mold 4.

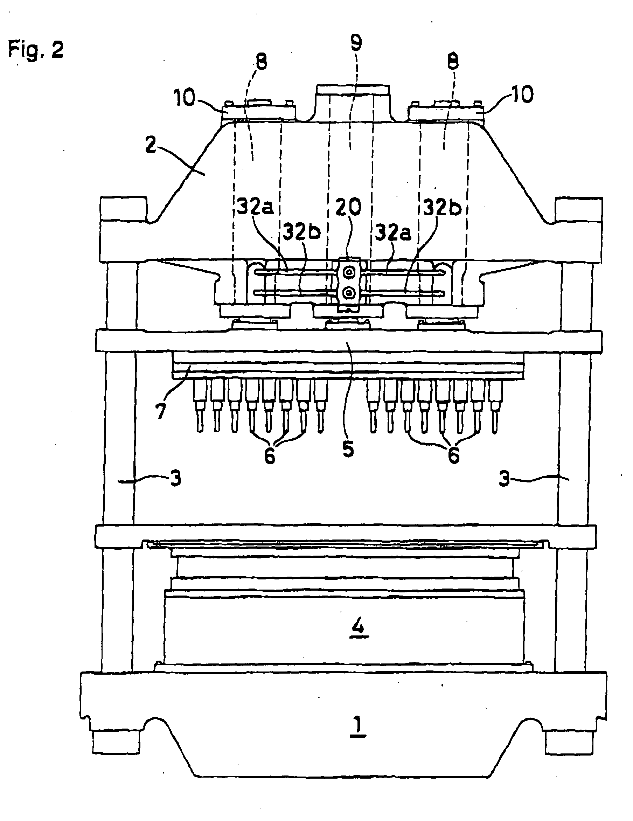

The above mentioned circulation device 20 which is normally provided to every mold clamping cylinder 8, is fixed, as in the embodiment shown in Fig.2, at the central side of the stationary platen 2 with a pedestal 21 as the circulation device 20 in common.

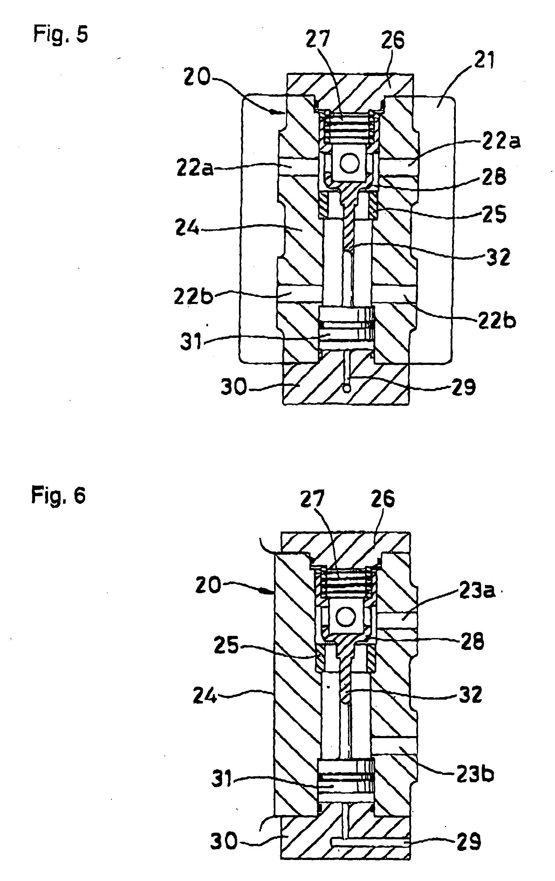

As shown in Fig.5 and Fig.6, the circulation device comprises, a cylinder24; having both ends closed, circulation ports 22a,22b for pressure oil on an upper and lower sides of the cylinder are bored, and supply and discharge ports23a,23b are bored at the same level position of the circulation ports on another side of the cylinder which is provided for the circulation ports; a valve seat 25 provided to an inside of the cylinder adjacent to an upper side of the supply and discharge ports23; a check valve 28 which is held against the valve seat side by a spring member 27 between the valve seat25 and the upper cover member 26; a pilot oil circuit 29 bored through a cover member 30 on a lower end of the cylinder; in the inside of the cylinder, a rod 32 for a valve opening which has a piston 31 at an end close to the cover member and another end touches to the check valve; circulation pipes 32a,32b which are provided so as to be communicate the circulation ports22a,22b and circulation holes 17a,17b which are bored to a pair of the mold clamping cylinders 8.

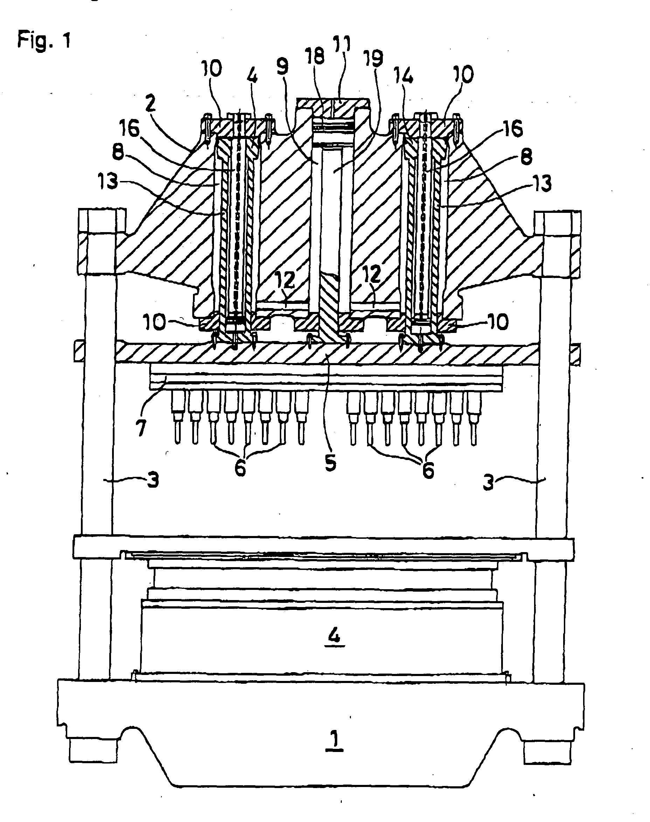

In the above construction, in the mold opening state as shown in Fig.1, when the pressure oil is forced into the circulation device 20 which is in the valve closing state from supply and discharge ports 23a,23b of the circulation device 20, the pressure oil pressurizes the both of the mold clamping cylinders 8,8 simultaneously through the upper side of the circulation pipes 32a,32b. Accordingly, by the differential pressure which is caused by the difference of the receiving area of the upper and lower surfaces of the piston 14 in the mold clamping ram 13, both of the mold clamping rams 13 begin to move simultaneously at a high speed to downward. Also, the pressure oll in the upper chamber flows away to upward from the clearance existing around the piston, Accordingly, the mold clamping rams 13,13 can be transferred at a high speed without receiving a hydraulic resistance,

As the lower end of the charge rod 19 and the mold clamping rams 13,13 is are connected to the movable platen 5, the movable platen 5 is moved by the movement of the mold clamping rams 13, 13, accordingly the charge rod 19 begins to be pulled by the movable platen 5, then the charge piston 18 pressurizes the pressure oll in the charge cylinder 9, so that the pressure oil is squeezed out from the communicating circuits 12,12 into the mold clamping cylinders 8,8 and replaces the displacement. This gives that the movable platen 5 falls moves downward at a high speed, and the injection cavity mold 4 below and the core 6 are closed.

The upper chamber and the lower chamber of the mold clamping cylinder are partitioned watertightly when the pistons 14,14 reach and fit to the lower ends portions of the mold clamping cylinder8,8 having smaller diameter. At this point, the hydraulic circuit valve, which is not shown, of the lower supply and discharge port 23b is switched over to discharge mode, and the pressure oil in the lower chamber is led into the tank. This removes the hydraulic pressure in the lower chamber, the pistons 14,14 move downward by being pushed by the pressure in the upper chamber toward the clamping position, and the state of the pistons 14,14 changes from movement into clamping the mold with high pressure.

Since the movable platen 5 at clamping the mold is held at two points, left and right, by both of the mold clamping rams 13,13, even if the movable platen is constructed in horizontally long in order to fix a plurality of cores 6,6, the movable platen supports the injection pressure sufficiently, so that no bent occurs in the movable platen 5 and a gap of a parting line are prevented also.

A step of the mold opening after the completion of the molding, begins with closing the hydraulic circuit of the upper and lower supply and discharge ports 23a, 23b, and the pressure oil is stopped. Subsequently, the pressure oil is forced into the pilot oil circuit 29, in order to actuate the piston 31 to upward, so that the check valve 28 is opened by the open valve rod 32. This gives that the inside of the circulation device which has been in a closed state is opened, and the upper and the lower chambers of the mold clamping cylinders 8,8 ,mutually, are communicated with the upper and lower circulation pipes 32a,32b via the inside of the circulation device.

In synchronizing with the opening of the check valve 28, the pressure oil is pressed into the booster rams 16,16 of the both of the mold clamping cylinders 8,8, so that the mold opening is conducted by moving the movable platen5 upward by the mold clamping rams 13,13. At this time the charge rod 19 also moves upward simultaneously. The pressure oil in the upper chamber in the mold clamping cylinders 8,8 is forced out to the circulation device 20 by the piston 14, along with the upward movement of the molding rams 13,13, and a part of oil flows into the lower chamber via the circulation device 20. Also, by suction in the charge cylinder 9, a surplus amount of the pressure oil is stored by flowing into the charge cylinder 9. Also, there is a clearance around the pistons 14,14 after the piston 14,14 move up to the upper chamber of the mold clamping cylinders 8,8, and the pressure oil flows away to downward through the clearance to the contrary of the mold closing case, so that the pressure oil of the upper chamber provides no resistance against the upward movement of the piston, and the movable platen 5 which is connected to the mold clamping rams 13,13 goes back to the original mold opening position at a high speed.

Furthermore, the above mentioned preferred embodiment was given as the explanation of a vertical type mold clamping device which can be employed for the mold clamping device of the rotational type molding machine and also which can be usable without modification as the horizontal type mold clamping device by providing horizontally on a base of a machine. Therefore, the invention is not limited to the vertical type mold clamping device as shown in the figures.

In the present Specification "comprises" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A mold clamping apparatus comprising,
a base platen on which sets an injection mold is set;
a stationary platen which has a mold clamping cylinder;
said base platen and said stationary platen are connected by a tie bar, and are facing toward each other;
a movable platen which is positioned between said base platen and said stationary platen, in which said tie bar is inserted, and which is connected to a mold clamping ram of said mold clamping cylinder;
said mold clamping cylinder has a cylinder portion of which the inner diameter at a lower end portion is smaller than the inner diameter of other portions of the lower end portion;
said mold clamping ram has a piston of which the outer diameter is capable to fit to the lower end portion of said cylinder;
a booster ram is inserted internally to said mold clamping ram;
a circulation device for pressure oil is provided to a side of said mold clamping cylinder;
a charge cylinder is provided to a side portion of said mold clamping cylinder;
said lower end portion of said mold clamping cylinder is communicated with a lower end portion of the charge cylinder; and
said mold clamping ram and **a** charge rod of said charge cylinder are connected with said movable platen, wherein
said mold clamping cylinders consist of a pair, have the mold clamping rams respectively, and are provided to said stationary platen on a left and a right side with leaving a space;
the charge cylinder is provided to said stationary platen which is positioned between a pair of said mold clamping cylinders;
said movable platen is connected to a pair of said mold clamping rams;
a pair of said mold clamping cylinders include to make an operation of the mold clamping at two points simultaneously by sharing said charge cylinder.

2. The mold clamping apparatus according to claim 1, wherein the circulation device comprises
a cylinder ;
circulation ports for pressure oil on upper and lower sides of said cylinder are bored, and supply and discharge ports are bored at the same level position of said circulation ports on another side of the cylinder which is provided for said circulation ports;
a valve seat provided to an inside of the cylinder adjacent to an upper side of said supply and discharge ports;
a check valve which is held against the valve seat side by a spring member;
a pilot oil circuit bored through a cover member on a lower end of said cylinder;
in the inside of said cylinder, a rod for a valve opening which has a piston at an end portion closer to said cover member, and another end touches to said check valve;
a circulation pipe which is provided so as to communicate said circulation ports and circulation holes which are bored to a pair of said mold clamping cylinders;
said circulation device is set on said stationary platen at a position between a pair of said mold clamping cylinders.
